# EUROPÄISCHE PATENTSCHRIFT

(11) **EP 1 745 879 B1**
(45) Veröffentlichungstag und Bekanntmachung des Hinweises auf die Patenterteilung: **05.11.2008**
(21) Anmeldenummer: 06012953.3
(22) Anmeldetag: 23.06.2006
(51) Int. Cl.: B23K 9/00, D21D 5/16

(54) **Verfahren zum Herstellen von metallischen Spaltsieben, Verfahren zum Herstellen von metallischen Spaltrohrfiltern und Spaltrohrfilter**
Methode of manufacturing wedge wire screens and product
Méthode de fabrication de tamis à fente et produit

(30) Priorität: 21.07.2005 DE 102005034789
(43) Veröffentlichungstag der Anmeldung: 24.01.2007
(73) Patentinhaber: Boll & Kirch Filterbau GmbH, 50170 Kerpen (DE)
(72) Erfinder: Rathsmann, Jens, 52385 Nideggen (DE)
(74) Vertreter: Althaus, Arndt

(56) Entgegenhaltungen:
- EP-A1- 0 432 448
- WO-A-98/14658
- DD-A1- 65 611

## Beschreibung

Die Erfindung betrifft ein Verfahren zum Herstellen von metallischen, aus miteinander verschweißten Profildrähten und Querprofilen bestehenden Spaltsieben mit den Schritten Anordnen von Profildrähten mit vorgegebenem Spaltabstand zueinander, Inkontaktbringen der Profildrähte und Querprofile sowie Verschweißen der Profildrähte und Querprofile an den Kontaktstellen durch Aufschmelzen von Verbindungsmaterial mittels Schmelzwärmezufuhr (siehe WO-A-98 14638). Die Erfindung betrifft ferner ein Verfahren zum Herstellen von Spaltrohrfiltern mit den Schritten Bereitstellen eines zylindrischen, aus miteinander verschweißten Profildrähten und Querprofilen bestehenden Spaltsiebs als Filtermittel, wobei die Profildrähte des Spaltsiebs mit vorgegebenem Abstand zueinander angeordnet sind und mit den Querprofilen verbunden sind, und Befestigen von metallischen, einen zylindrischen Verbindungskragen aufweisenden Endkappen mit dem jeweiligen Rohrende des zylindrischen Spaltsiebs. Schließlich betrifft die Erfindung auch einen Spaltrohrfilter mit einem metallischen, aus miteinander verschweißten Profildrähten und Querprofilen bestehenden zylindrischen Spaltsieb als Filtermittel, wobei die Profildrähte des Spaltsiebs mit vorgegebenem Spaltabstand zueinander angeordnet sind und mit den Querprofilen an Kontaktstellen durch mittels Schmelzwärmezufuhr aufgeschmolzenes Verbindungsmaterial verbunden sind, sowie mit Endkappen an den Rohrenden, die einen zylindrischen Verbindungskragen aufweisen, mit dem das zylindrische Spaltsieb am jeweiligen Rohrende in Kontakt steht und verbunden ist.

Insbesondere in der chemischen und petrochemischen Industrie, in der Wasseraufbereitung, im Motorenbau und im Maschinen- und Apparatebau werden zum Filtern von Fluiden häufig Spaltsiebe bzw. mit Spaltsieben als Filtermittel versehene Spaltrohrfilter eingesetzt, wobei die Spaltweite zwischen den mit dem entsprechenden Spaltabstand zueinander angeordneten Profildrähten den Anwendungsbereich der entsprechenden Spaltsiebe bzw. Spaltrohrfilter bestimmt. Mit abnehmender Spaltweite sowie mit abnehmendem Querschnitt der Profildrähte nehmen die Probleme bei der Fertigung der Spaltsiebe sowie der Fertigung der Spaltrohrfilter zu. Bei Spaltrohrfilter müssen außerdem Endkappen an den Rohrenden des zylindrischen Spaltsiebs befestigt werden, wobei die Endkappen entweder aus Verschlußdeckeln, Anströmöffnungen, Anschlußöffnungen od.dgl. bestehen können. Bei dem Verbund zwischen den Endkappen und den rohrförmigen Spaltsieben muß ein abdichtender Anschluß gewährleistet sein und gleichzeitig muß die Verbindung zwischen der Endkappe und dem Spaltsieb den im Betrieb der Spaltrohrfilter auftretenden Drücken und Druckunterschieden standhalten können.

Die Herstellung von Spaltsieben erfolgt im Stand der Technik in der Regel durch Widerstandsschweißen, wobei die parallel zueinander angereihten Profildrähte bzw. Profilwindungen mit den Querprofilen durch Aufbringen eines ausreichenden Schweißdrucks und Aufbringen der benötigen Energie verschweißt werden. Die dabei entstehenden Schweißrückstände wie z.B. Schlacken und Bärte sowie Verformungen an den meist dünnen Profildrähten begrenzen die kleinstmöglich herzustellende bzw. zu gewährleistende Spaltweite.

Die Kappenbefestigung bei Spaltrohrfiltern erfolgt im Stand der Technik häufig durch Schmelzschweißen. Beim Schmelzschweißen werden die Querprofile, welche das Stützgerüst für die das Filtermittel bildenden Profildrähte bilden, mit den Endkappen verschmolzen. Bei den bisher eingesetzten Schmelzschweißverfahren kann zwar eine mechanisch feste Befestigung des Spaltsiebs an den Endkappen bzw. umgekehrt erreicht werden; eine abgedichtete Verbindung im Bereich der Endkappen setzt jedoch ein entsprechend geringes Passungsmaß zwischen dem rohrförmigen Ende des Spaltsiebs und einem Verbindungskragen der anzuschließenden Endkappe voraus. Bei Toleranzabweichungen des Passungsmaßes können an der Fügestelle zwischen den Endkappen und dem Spaltsieb Bypässe auftreten, die zu Fehlfunktionen der Spaltrohrfilter führen können. Beim Schmelzschweißverfahren im Stand der Technik wird die Schweißnaht als Kehlnaht zwischen den Endkappen und den Stirnflächen des Stützprofils des Spaltsiebs ausgeführt. Beim Schmelzschweißen muß äußerst sorgfältig darauf geachtet werden, daß die Schweißflamme bzw. Schweißwärme nicht einzelne Profildrähte beschädigt, da bei derartigen Beschädigungen Bypässe entstehen, wodurch die Filterfunktion des Spaltsiebs bzw. Spaltrohrfilters nicht mehr gewährleistet wäre.

Alternativ zum Schmelzschweißen als Fertigungsverfahren für die Kappenbefestigung ist es bekannt, die Endkappen mit den Spaltsieben zu verkleben. Über die Klebeverbindung kann zugleich eine Abdichtung gewährleistet werden. Nachteilig bei Klebeverbindung ist, daß der Kleber entsprechend dem zu filternden Medium ausgewählt werden muß und eine Klebeverbindung für zahlreiche Fluide nicht zugelassen ist.

Aufgabe der Erfindung ist es, ein Herstellverfahren für Spaltsiebe und für Spaltrohrfilter mit Spaltsieben als Filtermittel zu schaffen, welche eine zuverlässige, einfach herzustellende Verbindung zwischen den Profildrähten und den Querprofilen und/oder den Spaltsieben und den Endkappen ermöglichen, ohne daß das Risiko besteht, daß die Profildrähte partiell beschädigt werden.

Erfindungsgemäß wird hierzu vorgeschlagen, beim Verfahren zum Herstellen von metallischen Spaltsieben die Schmelzwärmezufuhr zum Aufschmelzen des Verbindungsmaterials nur einseitig, und , vorzugsweise ausschließlich, von der dem Profildraht abgewandten Seite der Querprofile her durch das Material der Querprofile hindurch vorzunehmen. Bei dem erfindungsgemäßen Verfahren wird mithin der Profildraht ausschließlich durch das Material der Querprofile hindurch mit der Schmelzwärme bzw. der Flamme des Schmelzwärmeerzeugers beaufschlagt. Das Material der Querprofile bildet dabei einen Schutz für die deutlich dünneren Profildrähte, so daß diese vor Zerstörung oder Deformierung durch die Schmelzwärme geschützt sind. Das bei der Schmelzwärmezufuhr aufgeschmolzene Material der Querprofile bildet zugleich das Verbindungsmaterial, in welches die Profildrähte zumindest lokal im Bereich der Querprofile formschlüssig eingeschlossen werden. Da die Profildrähte bei der erfindungsgemäßen Verfahrensführung jeweils durch das Verbindungsmaterial geschützt mit der Schweißflamme bzw. Schmelzwärme beaufschlagt werden, kann eine Schweißverbindung erreicht werden, bei der keine Verschmelzungsrückstände und Anlaßfarben und auch keine Deformierungen der Profildrähte entstehen, so daß eine Nacharbeit entbehrlich ist.

Das erfindungsgemäße Verfahren läßt sich im Prinzip bei allen Arten von Spaltsieben einsetzen. Zur Bildung der Spaltsiebe können mehrere separate Querprofile parallel zueinander angeordnet werden. Bei dieser Art von Spaltsieben bilden die separaten Querprofile ein Stützgerüst, welches durch die Profildrähte versteift ist. Alternativ können die Querprofile auch aus Windungen eines die Profildrähte umschlingenden Querdrahts bestehen. Die Querprofile können aus Querbänden, Querstäben, Querdrähten od.dgl. bestehen und beispielsweise auch dreieckförmige Querschnitte aufweisen. Bei der insbesondere bevorzugten Ausgestaltung werden die Querprofile durch die Schmelzwärmezufuhr partiell aufgeschmolzen und mit den Profildrähten stoffschlüssig verbunden. Das Aufschmelzen des Materials der Querprofile und Verbinden mit den Profildrähten kann insbesondere in ununterbrochenen Nähten erfolgen.

Bei einem Verfahren zum Herstellen von Spaltrohrfiltern wird die vorgenannte Aufgabe erfindungsgemäß dadurch gelöst, daß der Verbindungskragen mit dem Spaltsieb verschweißt wird und durch mittels Schmelzwärmezufuhr aufgeschmolzenes Verbindungsmaterial verbunden wird, wobei das Aufschmelzen des Verbindungsmaterials für die Kappenbefestigung von der dem Spaltsieb abgewandten Seite des Verbindungskragens her durch das Material des Verbindungskragens hindurch erfolgt. Auch beim Verfahren zum Herstellen von Spaltrohrfiltern mit angeschlossenen Endkappen werden die deutlich dünneren Profildrähte ausschließlich durch das Material des Verbindungskragens hindurch mit diesem verschweißt, so daß der Verbindungskragen der Endkappen die dünneren Profildrähte vor Zerstörung durch die Schmelzwärme z.B. des Lichtbogens des Schweißbrenners schützt. Da die Profildrähte bei der erfindungsgemäßen Verfahrensführung jeweils durch das verbindungsmaterial geschützt mit der Schweißflamme bzw. Schmelzwärme beaufschlagt werden, kann eine Schweißverbindung erreicht werden, bei der keine Verschmelzungsrückstände und Anlaßfarben und auch keine Deformierungen der Profildrähte entstehen, so daß eine Nacharbeit entbehrlich ist. Das am Verbindungskragen aufgeschmolzene Verbindungsmaterial liefert die Schmelze für die Schweißverbindung. Durch die mit einem Schweißbrenner aufgebrachte Schmelzwärme beginnt der Verbindungskragen in einem definierten Bereich, insbesondere auch an den Kontaktstellen mit den Profildrähten, zu schmelzen, wodurch eine stoffschlüssige Verbindung zwischen den Profildrähten und dem Verbindungskragen der Endkappe erreicht wird. Auf eine Paßgenauigkeit zwischen dem Verbindungskragen und dem Durchmesser des Rohrendes des Spaltsiebs kommt es hierbei nicht entscheidend an, denn die Profildrähte und/oder die Querprofile können derart in aufgeschmolzenes Verbindungsmaterial eingeschlossen werden, daß eine Dichtigkeit an der Fügestelle zwischen Spaltsieb und Endkappe gewährleistet werden kann. Eine Dichtigkeit kann insbesondere dann auf vorteilhafte Weise erreicht werden, wenn die Schmelzwärmezufuhr am Verbindungskragen entlang wenigstens einer ununterbrochen umlaufenden Schweißnaht erfolgt. Besonders vorteilhaft wird ausschließlich das Material des Verbindungskragens als Verbindungsmaterial aufgeschmolzen.

Gemäß einer weiteren vorteilhaften Ausgestaltung kann mit wenigstens einem Schweißpunkt oder einer zweiten Schweißnaht zumindest partiell eine stoffschlüssige Verbindung zwischen dem Verbindungskragen und den Querprofilen erzeugt werden. Mit dieser Ausgestaltung kann eine hohe mechanische Stabilität zwischen Endkappe und Spaltsieb erreicht werden, wobei sich gleichzeitig aus der Fixierung im Bereich der Endkappe keine Profildrähte herauslösen können. Bei hohlzylindrisch geformten Spaltsieben kann die Schweißverbindung mit den Verbindungskragen der Endkappen sowohl am Innenumfang als auch am äußeren Umfang der hohlzylindrischen Spaltsiebe erfolgen. Bei der erfindungsgemäßen Verfahrensführung können die Querprofile außenseitig oder innenseitig der Profildrähte angeordnet sein.

Bei sämtlichen Verfahren ist besonders vorteilhaft, wenn als Wärmequelle zum Erzeugen der Schmelzwärme ein Schweißbrenner, insbesondere ein WIG-Schweißbrenner oder ein Plasmaschweißbrenner verwendet wird. Weiter vorzugsweise können die Profildrähte am Querprofil und/oder das Spaltsieb am Verbindungskragen in der Kontaktzone vor Beginn der Schmelzwärmezufuhr vorfixiert werden. Die Vorfixierung kann insbesondere mittels Heften, Klemmen, Punkten, Kleben od.dgl. erfolgen. Gleichzeitig kann bei dieser Verfahrensführung eine optimale elektrische Leitfähigkeit zwischen den Endkappen und dem Spaltsieb erreicht werden.

Weiter vorzugsweise kann das Aufschmelzen von Material mittels Werkzeugen, insbesondere mittels an den Profildrähten angelegten, die Querprofile seitlich begrenzenden Werkzeugen lokal begrenzt werden. Die Werkzeuge können insbesondere aus Kupferschuhen od.dgl. bestehen und mit den Werkzeugen können die Profildrähte zusätzlich vor zu großem Wärmeeintrag geschützt werden und der Fluß des Schmelzbades des Verbindungsmaterials beeinflußt werden.

Bei einem Spaltrohrfilter wird die vorgenannte Aufgabe erfindungsgemäß dadurch gelöst, daß das Aufschmelzen des Verbindungsmaterials für das Spaltsieb durch das Material der Querprofile hindurch erfolgt ist und/oder der Verbindungskragen mit dem Spaltsieb verschweißt und durch mittels Schmelzwärmezufuhr aufgeschmolzenes Verbindungsmaterial verbunden ist, wobei das Aufschmelzen des Verbindungsmaterials für die Kappenbefestigung durch den Verbindungskragen hindurch erfolgt ist und die Profildrähte stoffschlüssig mit dem Verbindungskragen verbunden und von Material des Verbindungskragens umschlossen sind.

Die Erfindung ist insbesondere vorteilhaft einsetzbar, wenn die Profildrähte Querschnitte von < 5 mm² aufweisen und/oder die Spaltabstände im Spaltsieb vorzugsweise < 8mm betragen.

Weitere Vorteile und Ausgestaltungen der Erfindung ergeben sich aus der nachfolgenden Beschreibung von schematisch in der Zeichnung gezeigten Ausführungsbeispielen. In der Zeichnung zeigen:
- **Fig. 1**: schematisch in Schnittansicht ein Ausführungsbeispiel für einen erfindungsgemäßen Spaltrohrfilter;
- **Fig. 2**: schematisch ein zweites Ausführungsbeispiel für eine Endkappenbefestigung an einem Spaltrohrfilter;
- **Fig. 3**: schematisch ein drittes Ausführungsbeispiel für eine Endkappenbefestigung an einem Spaltrohrfilter;
- **Fig. 4**: schematisch ein viertes Ausführungsbeispiel für eine Endkappenbefestigung an einem Spaltrohrfilter;
- **Fig. 5**: ein erfindungsgemäß hergestelltes metallisches Spaltsieb in Draufsicht; und
- **Fig. 6**: schematisch die Verfahrensführung beim Herstellen des Spaltsiebs nach Fig. 5.

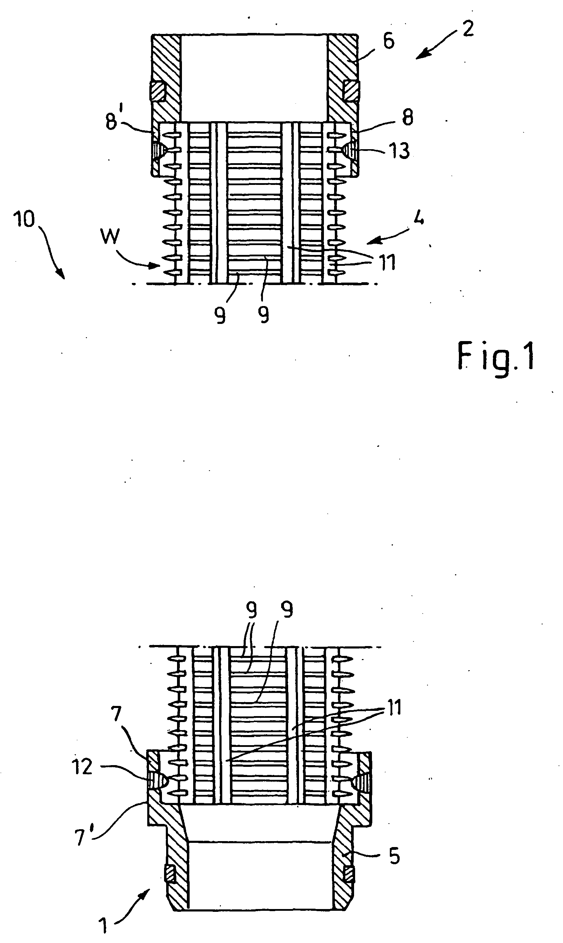

Der in Fig. 1 dargestellte, insgesamt mit Bezugszeichen 10 bezeichnete Spaltrohrfilter in Ausführungsform als Spaltkerze weist eine untere Endkappe 1 und eine obere Endkappe 2 auf, die jeweils endseitig an den Rohrenden eines zylindrisch geformten, das Filtermittel für den Spaltrohrfilter 10 bildenden Spaltsiebs 4 befestigt sind. Beide Endkappen 1, 2 des Spaltrohrfilters 10 weisen einen Anschlußabschnitt 5 bzw. 6 mit einer Durchtrittsöffnung für ein Fluid sowie einen hieran anschließenden und das Spaltsieb 4 umschließenden Verbindungskragen 7 bzw. 8 auf. Beide Endkappen 1, 2 bestehen aus schweißbarem Metall. Das Spaltsieb 4 ist, wie an sich bekannt, aus einer Vielzahl von aus Metall bestehenden Profildrähten 9 und mehreren quer zu den Profildrähte 9 ausgerichteten metallischen Querstreben bzw. Querprofile 11 zusammengebaut. Die Profildrähte 9 sind jeweils mit geringem Abstand zueinander angeordnet und der Abstand zwischen zwei Profildrähten 9 bestimmt die Spaltweite W des Spaltrohrfilters 10 und damit die Mindestgröße der auszufilternden Partikel. Beim Spaltrohrfilter 10 sind die Profildrähte 9 ringförmig angeordnet und mittels mehrerer quer zu diesen verlaufender Querstreben bzw. Querprofile 11 verbunden, so daß insgesamt das zylindrische Spaltsieb 4 eine ausreichende Eigensteifigkeit aufweist. Die Querstreben 11 erstrecken sich jeweils parallel zur Filterlängsachse und verlaufen zwischen beiden Endkappen 1, 2. Die Profildrähte haben einen annähernd dreieckförmigen Querschnitt und die Querprofile 11 befinden sich am Innenumfang der konzentrisch zueinander angeordneten Profildrähte 9. Die Verbindung zwischen den metallischen Profildrähten und den metallischen Querprofilen erfolgt mittels einer Schweißverbindung. Die Schweißverbindung zwischen den Querprofilen 11 und den Profildrähten 9 erfolgt vorzugsweise dergestalt, daß eine Schweißnaht von der den Profildrähten 9 abgewandten Rückseite der Querprofile 11 her an diesen angebracht wird, wodurch Material der Querprofile 11 aufgeschmolzen wird und die Profildrähte 9, deren Querschnitt, Größe und/oder Dicke meist deutlich geringer ist als die der Querprofile 11, stoffschlüssig umschließt, ohne daß die Profildrähte unmittelbar mit der Schweißflamme eines Schweißbrenners beaufschlagt sind. Die Kappenbefestigung der beiden einen Verbindungskragen 7 bzw. 8 aufweisenden Endkappen 1 und 2 erfolgt jeweils mittels einer konzentrisch umlaufenden Schweißnaht 12 bzw. 13, wobei beide Schweißnähte 12, 13 dadurch erzeugt werden, daß ein Schweißbrenner an der Außenseite 7' bzw. 8' des Verbindungskragens 7, 8 entlanggeführt wird und mit der Schmelzwärme der Schweißbrennerflamme von der dem Spaltsieb abgewandten Seite 7' bzw. 8' des Verbindungskragens 7 bzw. 8 her Verbindungsmaterial aufgeschmolzen wird. Das entsprechend aufgeschmolzene Verbindungsmaterial schließt am Innenumfang des Verbindungskragens 7 bzw. 8 die dort anliegenden Spitzen der Profildrähte 9 stoffschlüssig ein, wobei durch die konzentrisch umlaufenden Schweißnähte 12, 13 eine abgedichtete Verbindung zwischen den Profildrähten 9 des Spaltsiebs 4 und den Endkappen 1, 2 hergestellt werden kann. Das Aufschmelzen des Verbindungsmaterials am Verbindungskragen 7 bzw. 8 der Endkappen 1, 2 erfolgt jeweils durch das Material der Endkappen 1, 2 hindurch, womit erreicht wird, daß die Profildrähte 9 nicht unmittelbar mit der Schweißflamme beaufschlagt werden.

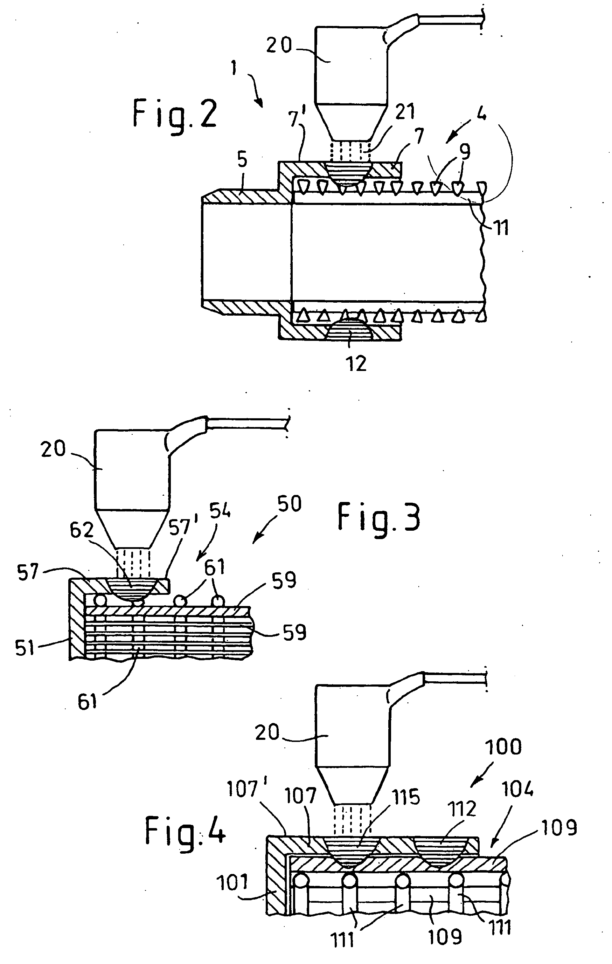

Fig. 2 zeigt schematisch die Verfahrensführung beim Anschweißen einer der beiden Endkappen. Beim Ausführungsbeispiel in Fig. 2 sind allerdings die dreieckförmigen Profildrähte 9 mit ihren spitzen Enden den Querprofilen 11 zugewandt, während die flachen Seiten der dreieckförmigen Profildrähte 9 nach außen gewandt sind und damit auch vom Verbindungskragen 7 umschlossen sind und mit diesem vor dem Anschweißen in Kontakt sind. In Fig. 2 ist ein Schweißbrenner 20 wie z.B. ein Plasmaschweißbrenner für die Schmelzwärmezufuhr zum Aufschmelzen des Verbindungsmaterials am Verbindungskragen 7 dargestellt. Erfindungsgemäß wird der Schweißbrenner 20 mit seiner Schweißflamme 21 an der Außenseite 7' des Verbindungskragens 7 entlanggeführt, um die umlaufende Schweißnaht 12 aufzubringen.

Beim Ausführungsbeispiel eines Spaltrohrfilters 50 in Fig. 3 wird eine als Verschlußkappe ausgebildete Endkappe 51 an dem einen Rohrende eines zylindrischen Spaltsiebs 54 befestigt. Abweichend zu den vorherigen Ausführungsbeispielen liegen hier die Querprofile 61 am Außenumfang der über ihren Abstand die Spaltweite des Spaltsiebs 54 bestimmenden Profildrähte 59 an und die Profildrähte erstrecken sich in Längsrichtung des Filters 50 von der einen Kappe 51 zur nicht dargestellten anderen Kappe, während die Querprofile 61 in Umfangsrichtung verlaufen. Die Schweißnaht 62 für die Kappenbefestigung wird mit dem Schweißbrenner 20 wiederum von der Außenseite 57' des Verbindungskragens 57 der Endkappe 51 her aufgebracht. Beim Filter 50 wird mit der Schweißnaht 62 wenigstens eine der Stützstreben 61 mit dem Verbindungskragen 57 stoffschlüssig verbunden.

Bei dem in Fig. 4 dargestellten Spaltrohrfilter 100 liegen die Profildrähte 109 am Außenumfang der ringförmigen Querprofile 111 an und an dem einen Ende des zylindrischen Spaltsiebs 104 ist eine Endkappe 101 mit einem Verbindungskragen 107 angeschweißt. Zur Kappenbefestigung sind eine erste Schweißnaht 112 und eine zweite Schweißnaht 115 vorgesehen. Beide Schweißnähte 112, 115 werden derart mittels eines Schweißbrenners 20 aufgebracht, daß dieser am Außenumfang 107' des Verbindungskragens entlanggeführt wird, wobei zumindest die Schweißnaht 112 umlaufend ausgebildet ist. Die Schmelzwärmezufuhr ist beim Aufbringen der Schweißnaht 112 derart eingestellt, daß ausreichend Verbindungsmaterial 112 aufgeschmolzen wird, das sämtliche Profildrähte 109, die auch beim Spaltsieb 104 parallel zur Filterachse ausgerichtet sind, stoffschlüssig mit dem Verbindungskragen 107 der Endkappe 101 verbunden sind. Die zweite Schweißnaht 115 ist derart ausgeführt, daß das am Verbindungskragen 107 aufgeschmolzene Verbindungsmaterial durch die Profildrähte 109 hindurch mit wenigstens einer der Querprofile 111 verbunden wird. Durch eine unmittelbare Schweißverbindung zwischen den Querprofilen 111 und dem Verbindungskragen 107 wird beim Spaltrohrfilter 100 eine hohe mechanische Stabilität zwischen der Endkappe 101 und dem Spaltsieb 104 erreicht.

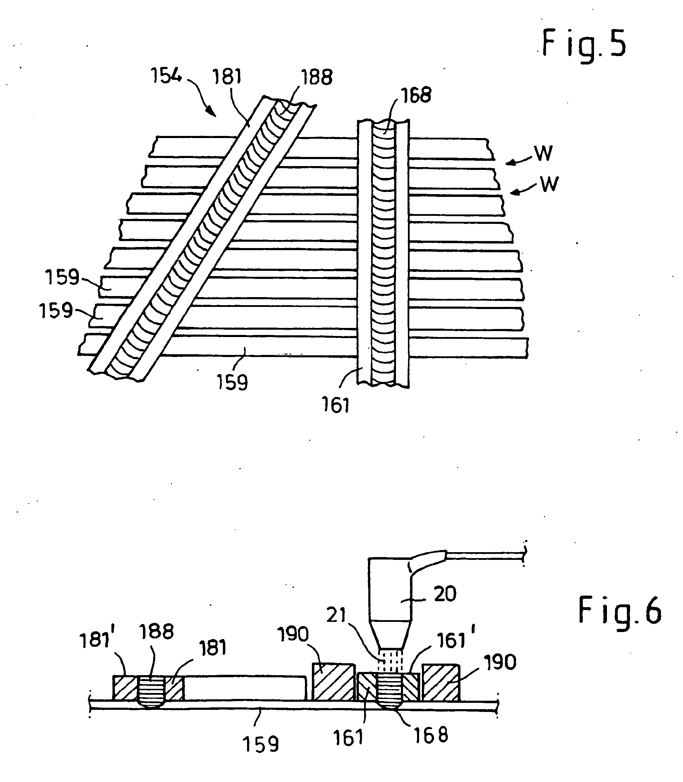

Die Fig. 5 und 6 zeigen an einem Ausführungsbeispiel schematisch die Herstellung eines Spaltsiebs 154. Die parallel und mit gleichmäßiger Spaltweite W zueinander angeordneten Profildrähte 159 sind mittels eines ersten Querprofils 161 und eines zweiten, schräg verlaufenden Querprofils 181 jeweils über eine Schweißnaht 168 bzw. 188 verbunden. Die Schweißnähte 168 bzw. 188 sind jeweils etwa in der Mitte der hier bandförmigen Querprofile 161, 181 als durchgehende Nähte gelegt. Wie Fig. 6 zeigt, wird der Schweißbrenner 20 entlang der den Profildrähten 159 abgewandten Rückseite 161' bzw. 181' der Querbänder 161, 181 geführt, so daß die Schweißflamme 21 nicht in unmittelbaren Kontakt mit den deutlich dünneren Profildrähten 159 kommt. Insbesondere bei schmalen Querbändern 161 können als zusätzlicher Schutz für die Profildrähte 159 Abdeckwerkzeuge wie insbesondere Kupferabdeckungen 190 seitlich an den Querbändern angelegt werden, die mit dem Schweißbrenner 20 mitbewegt werden.

Für den Fachmann ergeben sich aus der vorhergehenden Beschreibung zahlreiche Modifikationen, die in den Schutzbereich der anhängenden Ansprüche fallen sollen. Die Profildrähte, die auch als Siebprofile oder Filterprofile bezeichnet werden können, können jeden geeigneten Querschnitt und jede geeignete Dicke aufweisen. Die Erfindung läßt sich bei allen Ausgestaltungen von Spaltrohrfiltern anwenden. Die besonderen Vorteile der erfindungsgemäßen Verfahrensführung kommen insbesondere dann zum Tragen, wenn die Profildrähte Querschnitte aufweisen, die relativ klein sind, insbesondere kleiner als 5 mm². Auch die Querprofile, die auch als Stützprofile bezeichnet werden könnten, können aus Bandmaterial oder Runddraht od. dgl. bestehen oder auch andere Querschnitte aufweisen.

## Patentansprüche

1. Verfahren zum Herstellen von metallischen, aus miteinander verschweißten Profildrähten (159) und Querprofilen (161, 181) bestehenden Spaltsieben (4), mit den Schritten
a) Anordnen von Profildrähten (151) mit vorgegebenem Spaltabstand (W) zueinander,
b) Inkontaktbringen der Profildrähte (159) und Querprofile (161, 181), und
c) Verschweißen der Profildrähte (159) und Querprofile (161, 181) an den Kontaktstellen durch Aufschmelzen von Verbindungsmaterial und Erzeugung von Schweißnähten (168, 188) mittels Schmelzwärmezufuhr,
**dadurch gekennzeichnet, daß** die Schmelzwärmezufuhr zum Aufschmelzen des Verbindungsmaterials von der dem Profildraht (159) abgewandten Seite (161', 181') der Querprofile (161, 181) her durch das Material der Querprofile (161, 181) hindurch erfolgt.

2. Verfahren nach Anspruch 1, **dadurch gekenntzeichnet, daß** mehrere separate Querprofile (161, 181) parallel zueinander angeordnet werden.

3. Verfahren nach Anspruch 1, **dadurch gekenntzeichnet, daß** die Querprofile (161, 181) aus Windungen eines die Profildrähte umschlingenden Querdrahts bestehen.

4. Verfahren nach einem der Ansprüche 1 bis 3, **dadurch gekennzeichnet, daß** die Querprofile (161, 181) durch die Schmelzwärmezufuhr partiell aufgeschmolzen und mit den Profildrähten stoffschlüssig verbunden werden.

5. Verfahren nach einem der Ansprüche 1 bis 4, **dadurch gekennzeichnet, daß** die Querprofile (161, 181) aus Querbändern, Querstäben oder Querdrähten bestehen.

6. Verfahren nach einem der Ansprüche 1 bis 5, **dadurch gekennzeichnet, daß** das Material der Querprofile (161, 181), vorzugsweise ausschließlich das Material der Querprofile als Verbindungsmaterial aufgeschmolzen wird.

7. Verfahren nach einem der Ansprüche 1 bis 6, **dadurch gekennzeichnet, daß** das Aufschmelzen und Verbinden in Nähten (12, 13) erfolgt.

8. Verfahren zum Herstellen von Spaltrohrfiltern mit den Schritten
A) Bereitstellen eines zylindrischen, aus miteinander verschweißten Profildrähten (9) und Querprofilen (11) bestehenden Spaltsiebs als Filtermittel (4), wobei die Profildrähte des Spaltsiebs mit vorgegebenem Abstand zueinander angeordnet sind und mit den Querprofilen verbunden sind, und
B) Befestigen von metallischen, einen zylindrischen Verbindungskragen (7, 8) aufweisenden Endkappen (1, 2) mit dem jeweiligen Rohrende des zylindrischen Spaltsiebs (4),
**dadurch gekennzeichnet, daß** der Verbindungskragen (7, 8) mit dem Spaltsieb (4) verschweißt wird und durch mittels Schmelzwärmezufuhr aufgeschmolzenes Verbindungsmaterial und Erzeugung von Schweißnähten (12, 13) verbunden wird, wobei das Aufschmelzen des Verbindungsmaterials für die Kappenbefestigung von der dem Spaltsieb (4) abgewandten Seite (7', 8') des Verbindungskragens her durch das Material des Verbindungskragens (7, 8) hindurch erfolgt.

9. Verfahren nach Anspruch 8, **dadurch gekennzeichnet, daß** die Schmelzwärmezufuhr am Verbindungskragen (7, 8) entlang wenigstens einer umlaufenden Schweißnaht (12, 13) erfolgt und mit der umlaufenden Schweißnaht eine abgedichtete Verbindung bewirkt.

10. Verfahren nach Anspruch 8 oder 9, **dadurch gekennzeichnet, daß** ausschließlich das Material des Verbindungskragens (7, 8) als Verbindungsmaterial aufgeschmolzen wird.

11. Verfahren nach einem der Ansprüche 8 bis 10, **dadurch gekennzeichnet, daß** mit wenigstens einem Schweißpunkt oder einer zweiten Schweißnaht (13) zumindest partiell eine stoffschlüssige Verbindung zwischen dem Verbindungskragen und den Querprofilen erzeugt wird.

12. Verfahren nach einem der Ansprüche 1 bis 11, **dadurch gekennzeichnet, daß** als Wärmequelle zum Erzeugen der Schmelzwärme ein Schweißbrenner (20), insbesondere ein WIG-Schweißbrenner oder ein Plasmaschweißbrenner, verwendet wird.

13. Verfahren nach einem der Ansprüche 1 bis 12, **dadurch gekennzeichnet, daß** die Profildrähte am Querprofil und/oder das Spaltsieb am Verbindungskragen in der Kontaktzone vor Beginn der schmelzwärmezufuhr vorfixiert werden, wobei vorzugsweise die Vorfixierung durch Heften, Klemmen, Punkten, Kleben oder dgl. erfolgt.

14. Verfahren nach einem der Ansprüche 1 bis 13, **dadurch gekennzeichnet, daß** das Aufschmelzen von Material mittels Werkzeugen, insbesondere mittels an den Profildrähten angelegten und die Querprofile seitlich begrenzenden Werkzeugen (190) lokal begrenzt wird.

15. Spaltrohrfilter mit einem metallischen, aus miteinander verschweißten Profildrähten (9, 109) und Querprofilen (11, 61, 111) bestehenden zylindrischen Spaltsieb (4) als Filtermittel, wobei die Profildrähte des Spaltsiebs mit vorgegebenem Spaltabstand (W) zueinander angeordnet sind und mit den Querprofilen an Kontaktstellen durch mittels Schmelzwärmezufuhr aufgeschmolzenes Verbindungsmaterial und Erzeugung von Schweißnähten (12, 13, 16, 168, 188) verbunden sind, und mit Endkappen (1, 2) an den Rohrenden, die einen zylindrischen Verbindungskragen (7, 8) aufweisen, mit dem das zylindrische Spaltsieb (4) am jeweiligen Rohrende in Kontakt steht und verbunden ist, **dadurch gekennzeichnet, daß** das Aufschmelzen des Verbindungsmaterials für das Spaltsieb (4) durch das Material der Querprofile (11) hindurch erfolgt ist und/oder daß der Verbindungskragen (7, 8; 57; 107) mit dem Spaltsieb (4; 54; 104) verschweißt und durch mittels Schmelzwärmezufuhr aufgeschmolzenes Verbindungsmaterial stoffschlüssig verbinden ist, wobei das Aufschmelzen des Verbindungsmaterials für die Kappenbefestigung durch den Verbindungskragen (7, 8) hindurch erfolgt ist und die Profildrähte (9; 109) und/oder Querprofile (11; 61; 111) stoffschlüssig mit dem Verbindungskragen verbunden und von Material des Verbindungskragens umschlossen sind.

16. Spaltrohrfilter nach Anspruch 15, **dadurch gekennzeichnet, daß** zwischen dem Verbindungskragen (7, 8) und dem Spaltsieb eine abgedichtete, elektrisch leitfähige Verbindung besteht.

17. Verfahren oder Spaltrohrfilter nach einem der Ansprüche 1 bis 16, **dadurch gekennzeichnet, daß** die Profildrähte Querschnitte von < 20 mm², insbesondere < 5 mm² aufweisen und/oder die Spaltabstände im Spaltsieb vorzugsweise < 8 mm betragen.

## Claims

1. Method for the production of metallic slotted screens (4) consisting of profile wires (159) and transverse profiles (161, 181) welded to one another, with the steps of
a) arranging profile wires with a given slot spacing (W) with one another,
b) contacting the profile wires (159) and the transverse profiles (161,181), and welding the profiles wires (159) and transverse profiles (161, 181) at the contact points by fusing connection material and production of weld seams (168, 188) by means of supply of heat of fusion, **characterised in that** the supply of heat of fusion for fusing the connection material takes place from the side (161', 181') turned away from the profile wire (159) of the transverse profiles (161, 181) through the material of the transverse profiles (161, 181).

2. Method according to claim 1, **characterised in that** several separate cross profiles (161, 181) are arranged parallel to one another,

3. Method according to claim 1, **characterised in that** the cross profiles (161, 181) consist of windings of a of a transverse wire surrounding the profile wire.

4. Method according to one of claims 1 to 3, **characterised in that** the cross profiles (161, 181) are partially fused by the supply of the heat of fusion and are positively bonded to the profile wires.

5. Method according to one of claims 1 to 4, **characterised in that** the cross profiles (161, 181) consist of transverse bands, transverse rods or transverse wires.

6. Method according to one of claims 1 to 5, **characterised in that** the material of the transverse profiles (161,181), preferably only the material of the transverse profiles is fused on as connection material.

7. Method according to one of claims 1 to 6, **characterised in that** the fusing and connecting takes place in seams (12, 13),

8. Method for the production of slotted tube filters with the steps of
A) providing a cylindrical slotted screen as filter means consisting of profile wires (9) and transverse profiles (11) welded to one another, in which the profile wires of the slotted screen are arranged to one another with a given spacing and are connected to the transverse profiles, and
B) fastening metallic end caps (1, 2) comprising a cylindrical connection collar (7, 8) to the respective tube end of the cylindrical slotted screen (4),
**characterised in that** the connection collar (7, 8) is welded to the slotted screen (4) and connected by means of connection material fused by supply of heat of fusion, in which the fusing of the connection material and the production of weld seams (12, 13) for the cap fastening takes place from the side (7', 8') of the connection collar turned away from the slotted screen (4) through the material of the connection collar (7, 8).

9. Method according to claims 8, **characterised in that** the supply of the heat of fusion at the connection collar (7, 8) takes place along at least one surrounding weld seam (12, 13) and effects a sealed connection with the surrounding weld seam.

10. Method according to one of claims 8 to 9, **characterised in that** only the material of the connection collar (7, 8) is fused on as connection material.

11. Method according to one of claims 8 to 10, **characterised in that** an adhesively joined connection is produced at least partially between the connection collar and the transverse profiles with at least one weld spot or a second weld seam (13).

12. Method according to one of claims 1 to 11, **characterised in that** a welding torch (20), in particular a WIG welding torch or a plasma welding torch is used as heat source for producing the heat of fusion.

13. Method according to one of claims 1 to 12, **characterised in that** the profile wires at the transverse profile and/or the slotted screen at the connection collar are prefixed in the contact zone prior to the start of the supply of the heat of fusion, wherein the prefixing preferably takes place by stapling, clamping, spot-welding, glueing or the like.

14. Method according to one of claims 1 to 13, **characterised in that** the fusion of material is locally limited by means of tools, in particular by means of tools (190) applied to the profile wires and limiting the transverse profiles laterally.

15. Slotted tube filter with a metallic cylindrical slotted screen (4) as filter material consisting of profile wires (9, 109) and transverse profiles (11, 61, 111) welded to one another, in which the profile wires of the slotted screen are arranged to one another with a given slot spacing (W) and are connected to the transverse profiles at contact points by connection material fused by means of supply of heat of fusion and production of weld seams (12, 13, 168, 188) and with end caps (1, 2) at the tube ends, which comprise a cylindrical connection collar (7, 8) with which the cylindrical slooted screen (4) is in contact and connected to at the respective tube end, **characterised in that** the the fusing of the connection material for the slotted screen (4) has taken place through the material of the transverse profiles (11) and/or that the connection collar (7, 8; 57; 107) is welded to the slotted screen (4; 54; 104) and positively bonded by means of connection material fused by supply of heat of fusion, in which the fusing of the connection material for the cap fastening has taken place through the connection collar and that the profile wires (9; 109) and/or transverse profiles (11; 61; 111) are positively bonded to the connection collar and are surrounded by material of the connection collar.

16. Slotted tube filter according to claim 15, **characterised in that** a sealed, electrically conducting connection is present between the connection collar (7, 8) and the slotted screen.

17. Method or slotted tube filter according to one of claims 1 to 16, **characterised in that** the profile wires comprise cross sections of 20 mm², in particular < 5 mm², and/or the slot spacings in the slotted screen are preferably < 8 mm.

## Revendications

1. Procédé de fabrication de tamis à fentes (4) métalliques constitués de fils métalliques profilés (159) et de profilés transversaux (161, 181) soudés ensemble, comprenant les étapes suivantes:
a) agencement des fils métalliques profilés (159) avec un intervalle de fente (W) prédéfini entre eux,
b) mise en contact des fils métalliques profilés (159) et des profilés transversaux (161, 181), et
c) soudage des fils métalliques profilés (159) et des profilés transversaux (161, 181) au niveau des zones de contact, par fusion de matériau de liaison et fabrication de cordons de soudure (168, 188), au moyen d'un apport de chaleur de fusion,
**caractérisé en ce que** l'apport de chaleur de fusion pour la fusion du matériau de liaison s'effectue à travers le matériau des profilés transversaux (161, 181) à partir de leur côté (161', 181') opposé au fil métallique profilé (159).

2. Procédé selon la revendication 1, **caractérisé en ce qu'**on agence plusieurs profilés transversaux (161, 181) séparés, parallèlement les uns aux autres.

3. Procédé selon la revendication 1, **caractérisé en ce que** les profilés transversaux (161, 181) sont constitués de spires d'un fil transversal enroulé autour des fils métalliques profilés.

4. Procédé selon l'une des revendications 1 à 3, **caractérisé en ce que** l'apport de chaleur de fusion fait partiellement fondre les profilés transversaux (161, 181) et ceux-ci entrent en liaison de matière avec les fils métalliques profilés.

5. Procédé selon l'une des revendications 1 à 4, **caractérisé en ce que** les profilés transversaux (161, 181) sont constitués de bandes transversales, de tiges transversales, ou de fils métalliques transversaux.

6. Procédé selon l'une des revendications 1 à 5, **caractérisé en ce que** l'on met en fusion le matériau des profilés transversaux (161, 181), de préférence exclusivement le matériau des profilés transversaux en tant que matériau de liaison.

7. Procédé selon l'une des revendications 1 à 6, **caractérisé en ce que** la fusion et la liaison s'effectuent en cordons (12, 13).

8. Procédé de fabrication de filtres tubulaires à fentes comprenant les étapes suivantes :
A) préparation d'un tamis à fentes en tant que moyen de filtrage (4), ce tamis étant cylindrique et composé de fils métalliques profilés (9) et de profilés transversaux (11) soudés ensemble, dans lequel les fils métalliques profilés du tamis à fentes sont agencés avec un intervalle donné entre eux, et sont reliés aux profilés transversaux, et
B) fixation d'embouts de fermeture (1, 2) métalliques comportant un collet de liaison (7, 8) cylindrique, avec les extrémités tubulaires respectives du tamis à fentes (4),
**caractérisé en ce que** l'on soude le collet de liaison (7, 8) avec le tamis à fentes (4) et on le relie à celui-ci par l'intermédiaire d'un matériau de liaison mis en fusion par apport de chaleur de fusion et fabrication de cordons de soudure (12, 13), où le matériau de liaison pour la fixation des embouts est mis en fusion à travers le matériau du collet de liaison (7, 8) à partir du côté (7', 8') du collet de liaison qui est opposé au tamis à fentes (4).

9. Procédé selon la revendication 8, **caractérisé en ce que** l'apport de chaleur de fusion s'effectue sur le collet de liaison (7, 8), le long d'au moins un cordon de soudure périphérique (12, 13), et produit avec la soudure périphérique, une liaison étanche.

10. Procédé selon la revendication 8 ou 9, **caractérisé en ce qu'**on met en fusion exclusivement le matériau du collet de liaison (7, 8) en tant que matériau de liaison.

11. Procédé selon l'une des revendications 8 à 10, **caractérisé en ce que** l'on fabrique, avec au moins un point de soudage ou un deuxième cordon de soudure (13), une liaison de matière au moins partielle entre le collet de liaison et les profilés transversaux.

12. Procédé selon l'une des revendications 1 à 11, **caractérisé en ce que** l'on utilise comme source de chaleur pour produire la chaleur de fusion un chalumeau de soudage (20), en particulier un chalumeau au tungstène et au gaz inerte ou un chalumeau de soudage au plasma.

13. Procédé selon l'une des revendications 1 à 12, **caractérisé en ce que** l'on préfixe dans la zone de contact, avant le début de l'apport de chaleur de fusion, les fils métalliques profilés sur le profilé transversal et/ou le tamis à fentes sur le collet de liaison, la préfixation s'effectuant de préférence par agrafages, serrage, pointage, collage ou moyens similaires.

14. Procédé selon l'une des revendications 1 à 13, **caractérisé en ce que** l'on limite localement la fusion de matériau au moyen d'outillages, en particulier au moyen d'outillages (190) placés sur les fils métalliques profilés et limitant latéralement les profilés transversaux.

15. Filtre tubulaire à fentes comprenant un tamis à fentes (4) métallique en tant que moyen de filtrage, ce tamis à fentes étant cylindrique et composé de fils métalliques profilés (9, 109) et de profilés transversaux (11, 61, 111) soudés ensemble, dans lequel les fils métalliques profilés du tamis à fentes sont agencés avec un intervalle de fente (W) prédéfini entre eux et sont reliés aux profilés transversaux dans les zones de contact par du matériau de liaison mis en fusion moyennant apport de chaleur de fusion et fabrication de cordons de soudure (12, 13, 168, 188), filtre comprenant en outre des embouts de fermeture (1, 2) aux extrémités tubulaires qui présentent un collet de liaison (7, 8) cylindrique qui est en contact et relié avec le tamis à fentes (4) cylindrique aux extrémités tubulaires respectives, **caractérisé en ce que** la fusion du matériau de liaison pour le tamis à fentes (4) est effectuée à travers le matériau des profilés transversaux (11), et/ou en ce que le collet de liaison (7, 8 ; 57 ; 107) est soudé avec le tamis à fentes (4 ; 54 ; 104) et est relié à celui-ci par liaison de matière par du matériau de liaison mis en fusion moyennant apport de chaleur de fusion, où la fusion du matériau de liaison pour la fixation des embouts s'effectue à travers les collets de liaison (7, 8) et où les fils métalliques profilés (9 ; 109) et/ou les profilés transversaux (11; 61 ; 111) sont reliés par liaison de matière avec le collet de liaison et entourés du matériau du collet de liaison.

16. Filtre tubulaire à fentes selon la revendication 15, **caractérisé par** une liaison étanche et électriquement conductrice entre le collet de liaison (7, 8) et le tamis à fentes.

17. Procédé ou filtre tubulaire à fentes selon l'une des revendications 1 à 16, **caractérisé en ce que** les fils métalliques profilés présentent des sections <20 mm², en particulier < 5 mm², et/ou les intervalles de fente dans le tamis à fentes sont de préférence à <8mm.
